# EUROPEAN PATENT APPLICATION

(11) **EP 4 656 433 A2**
(43) Date of publication of application: **03.12.2025**
(21) Application number: 25178594.5
(22) Date of filing: 23.05.2025
(51) Int. Cl.: B60K 15/05

(54) **LID DEVICE**

(30) Priority: 27.05.2024 JP 2024085732
(71) Applicant: Minebea AccessSolutions Inc., Miyazaki-shi, Miyazaki 880-0293 (JP)
(72) Inventor: MERA, Hirofumi, Miyazaki-shi, Miyazaki, 880-0293 (JP)
(74) Representative: Zanardelli, Davide

(57) **Abstract**

A lid device 10 includes a base 11 having an opening 11b, and a lid 14 attached to the base 11 to be allowed to move between a fully closed position at which the lid closes the opening 11b and a fully open position at which the lid opens the opening 11b. The lid device 10 further includes a holding mechanism 20 capable of holding the lid 14 at a halfway open position between the fully open position and the fully closed position only when the lid 14 moves from the fully open position to the fully closed position.

## Description

### CROSS REFERENCE TO RELATED APPLICATION

This application claims benefit of priority to Japanese Patent Application 2024-085732, filed May 27, 2024, the entire content of which is incorporated herein by reference.

### BACKGROUND

### Technical Field:

The present invention relates to a lid device.

### Background Art:

The lid device disclosed in JP H07-17561 U includes a link mechanism that allows a lid to slide in the vehicle length direction to be opened or closed. To open the lid, the lid moves outward (pops up) in the vehicle width direction from the fully closed position to the halfway open position in response to an opening operation, and then moves in the vehicle length direction to the fully open position in response to a sliding operation. To close the lid, the lid moves in the vehicle length direction from the fully open position to the halfway open position in response to a sliding operation and then moves inward in the vehicle width direction to the fully closed position in response to a pushing operation.

To open the lid of the lid device disclosed in JP H07-17561 U, a two-motion operation, specifically, an opening operation and a sliding operation, of the lid, is required, which degrades the operability. Therefore, the lid device disclosed in Patent Document 1 has room for improvement in the operability when opening the lid.

### SUMMARY

The present invention aims to improve the operability of the lid device when opening the lid.

The present invention provides a lid device including a base having an opening, a lid attached to the base to be allowed to move between a fully closed position at which the lid closes the opening and a fully open position at which the lid opens the opening, and a holding mechanism capable of holding the lid at a halfway open position between the fully open position and the fully closed position only when the lid is moved from the fully open position to the fully closed position.

In the present aspect, the lid device includes the holding mechanism capable of holding the lid at a halfway open position only when the lid is moved from the fully open position to the fully closed position. In other words, the holding mechanism does not hold the lid at the halfway open position when the lid moves from the fully closed position to the fully open position. As a result, when the lid is opened, the lid moves to the fully open position in response to a single opening operation, so a two-motion operation is not required. Therefore, the operability when opening the lid can be improved. On the other hand, when the lid is closed, the lid is held by the holding mechanism when the lid moves from the fully open position to the halfway open position in response to a closing operation, and moves to the fully closed position in response to a further closing operation for the lid. As described above, when the lid is closed, the holding mechanism temporarily holds the lid at the halfway open position, so it is possible to prevent a hand or clothes from being caught between the lid and the base.

The present invention aims to improve the operability of the lid device when opening the lid.

### BRIEF DESCRIPTION OF DRAWINGS

Fig. 1 is a perspective view of a lid device in a fully open state according to a first embodiment of the present invention as viewed from a vehicle exterior side.
Fig. 2 is a perspective view of the lid device in the fully open state as viewed from a vehicle interior side.
Fig. 3 is a perspective view of the lid device in a fully closed state as viewed from a vehicle exterior side.
Fig. 4 is a side view of the lid device in a halfway open state with the cover of a holding mechanism removed.
Fig. 5 is an exploded perspective view of the lid device as viewed from the vehicle exterior side.
Fig. 6 is an exploded perspective view of the lid device as viewed from the vehicle interior side.
Fig. 7 is a perspective view of the holding mechanism.
Fig. 8 is an exploded perspective view of the holding mechanism.
Fig. 9 is an exploded perspective view of the holding mechanism viewed from a direction different from that in Fig. 8.
Fig. 10 is a front view of the holding mechanism.
Fig. 11 shows side views illustrating motions at the time of opening and closing.
Fig. 12 is a time chart showing motions of the lid device at the time of opening and closing.
Fig. 13A is an enlarged side view of the holding mechanism in the fully closed state in Fig. 11.
Fig. 13B is a perspective view of the holding mechanism in the fully closed state in Fig. 11.
Fig. 14A is an enlarged side view of the holding mechanism in the process of an opening operation in Fig. 11.
Fig. 14B is a perspective view of the holding mechanism in the process of the opening operation in Fig. 11.
Fig. 15A is an enlarged side view of the holding mechanism in the fully open state in Fig. 11.
Fig. 15B is a perspective view of the holding mechanism in the fully open state in Fig. 11.
Fig. 16A is an enlarged side view of the holding mechanism in the halfway open state in Fig. 11.
Fig. 16B is a perspective view of the holding mechanism in the halfway open state in Fig. 11.
Fig. 17 is a front view of a holding mechanism of a lid device according to a second embodiment.

### DETAILED DESCRIPTION

Hereinafter, an embodiment of the present invention will be described with reference to the drawings.

### (First Embodiment)

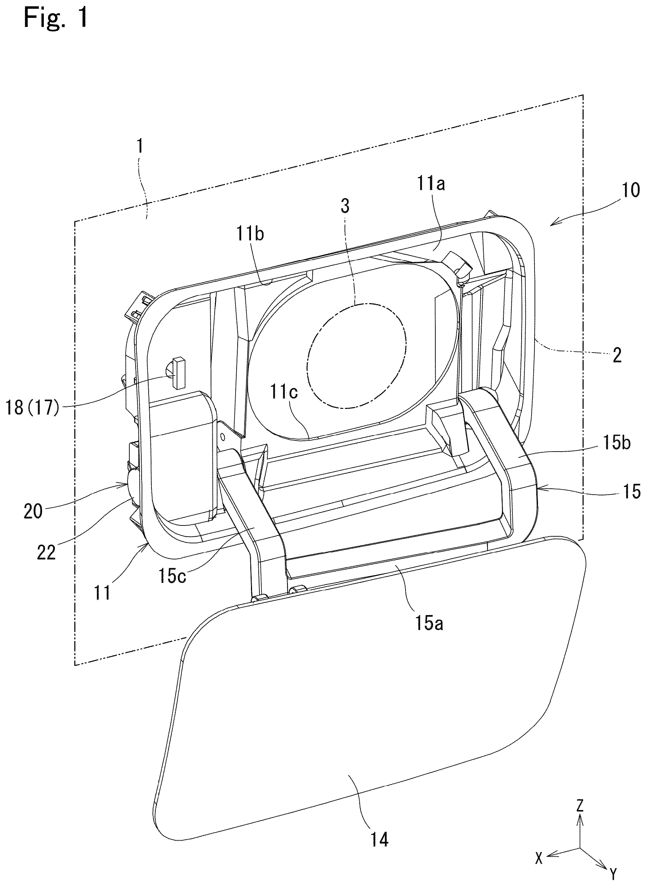

Referring to Figs. 1 to 3, a lid device 10 according to a first embodiment of the present invention is attached to a through hole 2 of a side panel 1 constituting the vehicle body of an automobile, which is an example of a vehicle. A power supply connector 3 (illustrated only in Fig. 1) as an example of a power receiving portion is provided on the vehicle interior side of the side panel 1 to face the through hole 2. The power receiving portion may be a receiving port for liquid fuels such as gasoline and diesel, other types of liquid fuels such as liquefied hydrogen and LP gas, gas fuels, or solid fuels.

The X direction in the drawings represents a vehicle length direction of the automobile, with the orientation indicated by the arrow pointing to the front side, while the orientation opposite to the arrow indicates the rear side. The Y direction in the drawings represents a vehicle width direction of the automobile, with the orientation indicated by the arrow pointing to the vehicle exterior side, while the orientation opposite to the arrow indicates the vehicle interior side. The Z direction in the drawings represents a vehicle height direction of the automobile, with the orientation indicated by the arrow pointing to the upper side, while the orientation opposite to the arrow indicates the lower side.

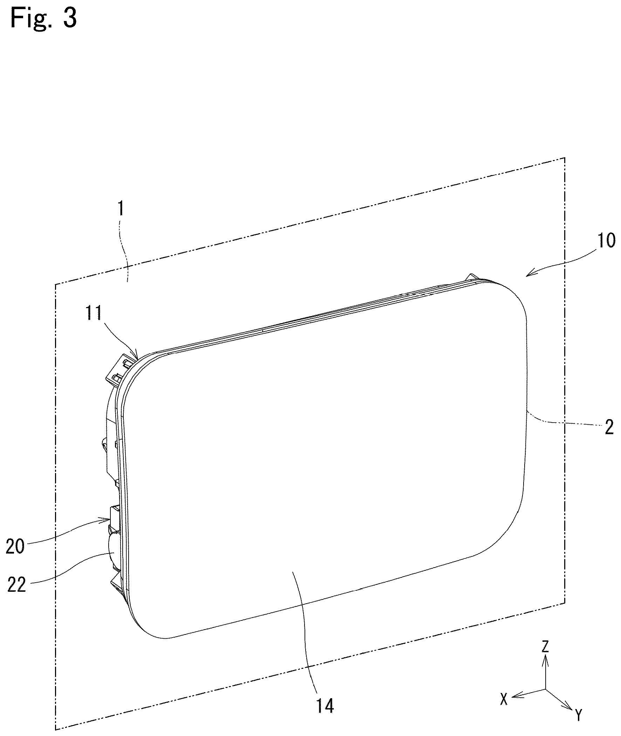

The lid device 10 includes a base 11, a lid 14, a lock unit 17, and a holding mechanism 20. The lid device 10 is of a manual type, and when a user performs an opening operation, the lid 14 moves from a fully closed position illustrated in Fig. 3 to a fully open position illustrated in Fig. 1 by a biasing force of a kick spring (biasing member) 23 included in the holding mechanism 20. When the user performs a closing operation, the lid 14 moves from the fully open position illustrated in Fig. 1 to the fully closed position illustrated in Fig. 3 against the biasing force of the kick spring 23.

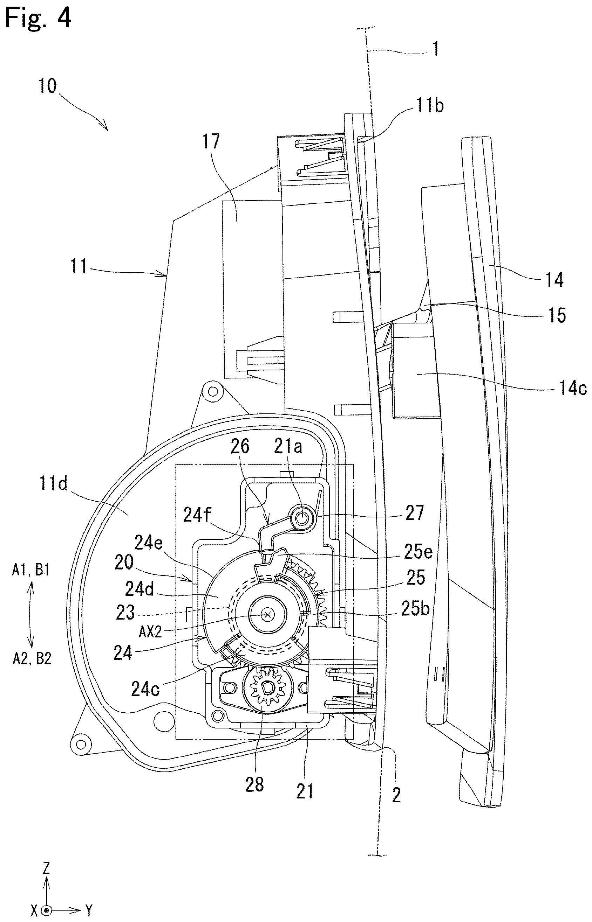

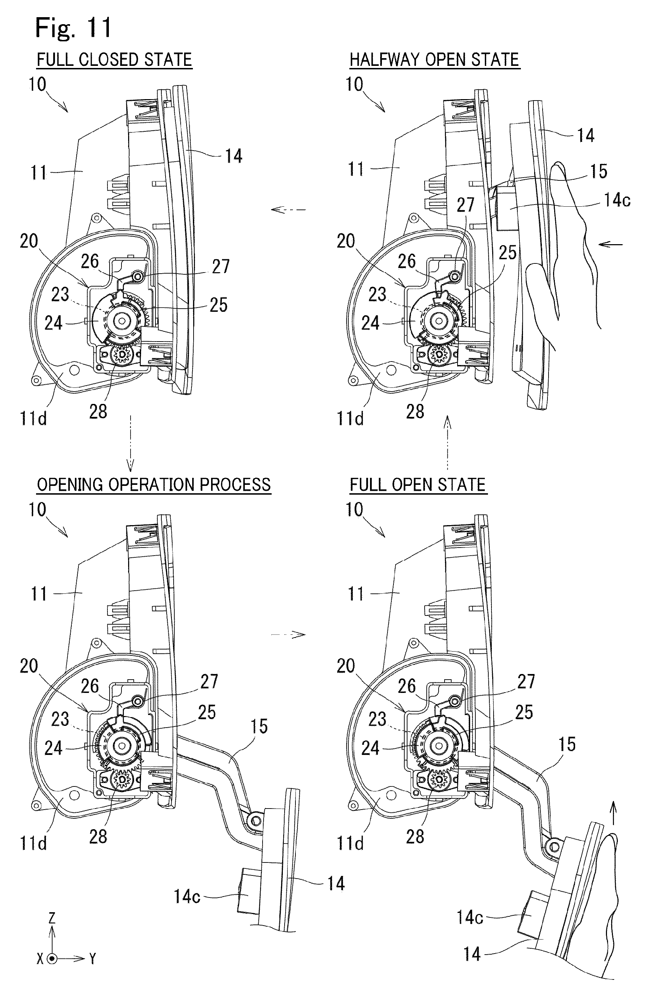

The opening operation in the present embodiment is an operation of pushing the lid 14 at the fully closed position illustrated in Fig. 3 toward the vehicle interior side (one motion). However, the opening operation can be changed as necessary, and may be, for example, an operation of pulling an opening lever inside the vehicle. Referring to Fig. 11, the closing operation includes a first closing operation in which the lid 14 at the fully open position (see Fig. 1) is slid upward to the halfway open position (see Fig. 4) and a second closing operation in which the lid 14 at the halfway open position (see Fig. 4) is pushed toward the vehicle interior side to the fully closed position (see Fig. 3) (two motions). Since it is assumed that the closing operation by a user is temporarily paused between the first closing operation and the second closing operation, in the lid device 10 of the present embodiment, the lid 14 can be held at the halfway open position (see Fig. 4) only when the lid 14 is closed.

Hereinafter, a configuration of the lid device 10 will be described in detail.

Referring to Figs. 1 and 3, the base 11 is attached to the side panel 1 from the vehicle interior side to close the through hole 2. The base 11 includes a recess 11a indented toward the vehicle interior side. The vehicle exterior side of the recess 11a is an opening 11b. A window hole 11c is provided at the center of the bottom of the recess 11a to face the power supply connector 3 in the vehicle width direction.

The lid 14 is attached to the base 11 via a separate link member 15. The lid 14 is configured to be vertically movable with respect to the base 11 between the fully closed position illustrated in Fig. 3 and the fully open position illustrated in Fig. 1 when viewed from the vehicle width direction. Although the lid 14 is temporarily held at the halfway open position illustrated in Fig. 4 while it is closed, it is not held at the halfway open position illustrated in Fig. 4 when it is opened. The halfway open position illustrated in Fig. 4 is set to a position between the fully open position illustrated in Fig. 1 and the fully closed position illustrated in Fig. 3, and is located at a distance from the opening 11b of the base 11 toward the vehicle exterior side. More specifically, the halfway open position illustrated in Fig. 4 is set in a range of 10% or more and 15% or less from the fully closed position in a moving range of the lid 14 in the vehicle height direction from the fully closed position illustrated in Fig. 3 to the fully open position illustrated in Fig. 1.

The lid 14 at the fully closed position illustrated in Fig. 3 completely closes the opening 11b of the base 11. The lid 14 at the fully open position illustrated in Fig. 1 completely opens the opening 11b of the base 11 to allow access to the power supply connector 3. The lid 14 at the halfway open position illustrated in Fig. 4 slightly opens the opening 11b of the base 11 (pop-up state).

Referring to Figs. 1 to 3, the link member 15 is rotatably attached to each of the lid 14 and the base 11. The link member 15 is rotated by the biasing force of the kick spring 23 transmitted from the holding mechanism 20 to move the lid 14 from the fully closed position illustrated in Fig. 3 to the fully open position illustrated in Fig. 1. On the other hand, the link member 15 is rotated by a manual operation force for moving the lid 14 from the fully open position illustrated in Fig. 1 to the fully closed position illustrated in Fig. 3.

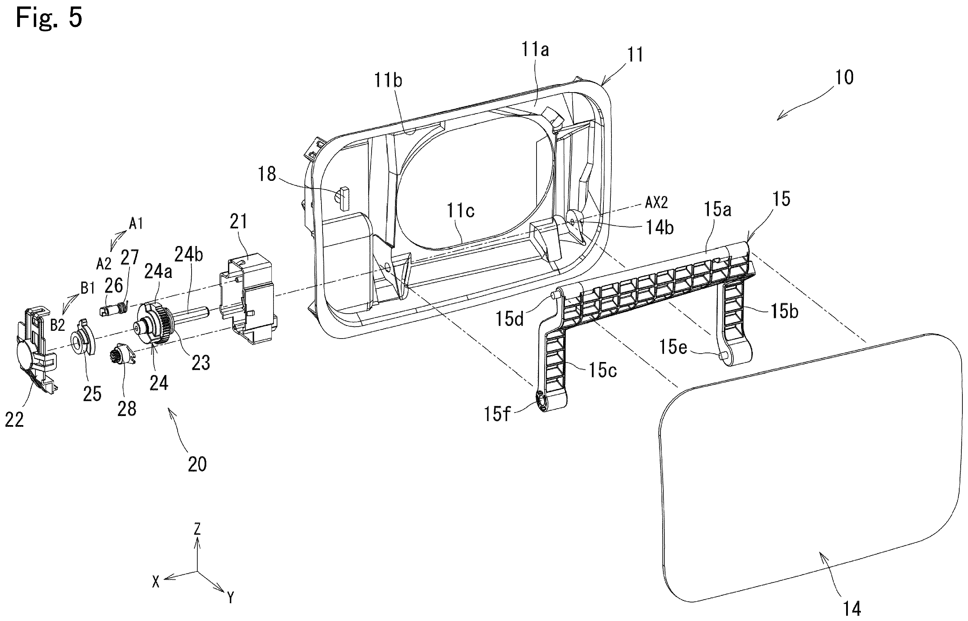

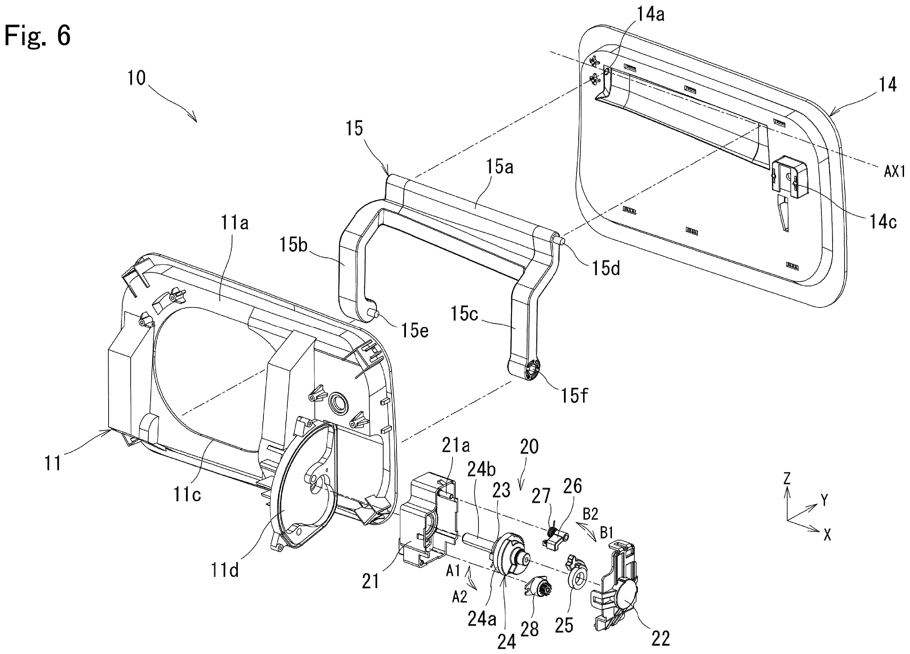

Referring to Figs. 5 and 6, the link member 15 includes a connecting portion 15a extending in the vehicle length direction, a first arm portion 15b extending from one end of the connecting portion 15a, and a second arm portion 15c extending from the other end of the connecting portion 15a.

The connecting portion 15a is connected to the lid 14 so as to be rotatable about an axis line AX1 extending in the vehicle length direction. That is, the connecting portion 15a is one end portion rotatably attached to the lid 14. To be more specific, pins 15d protruding from both ends of the connecting portion 15a are inserted into bearing holes 14a (illustrated only in Fig. 6) provided in the lid 14.

The tip of the first arm portion 15b is rotatably attached to the base 11 at a position spaced downward from the axis line AX1 so as to be rotatable about the axis line AX2 extending in the vehicle length direction. To be specific, a pin 15e protruding from the tip of the first arm portion 15b is inserted into a bearing hole 14b (illustrated only in Fig. 5) provided in the base 11.

A mounting hole 15f having a non-circular shape is provided at the tip of the second arm portion 15c. By inserting a first shaft portion 24b provided on a first rotating member 24, which will be described in detail below, into the mounting hole 15f, the tip of the second arm portion 15c is rotatable about the axis line AX2 together with a first rotating member 24 with respect to the base 11. That is, the tip of the second arm portion 15c having the mounting hole 15f is the other end portion that is rotatably attached to the base 11.

Referring to Figs. 1 to 3, the lock unit 17 is a configuration for locking the lid 14 at the fully closed position illustrated in Fig. 3, and is attached to the vehicle interior side of the recess 11a of the base 11. The lock unit 17 includes a lock portion 18 protruding from the bottom of the recess 11a to the vehicle exterior side. The lock portion 18 locks the lid 14 to prevent opening by engaging with a lock receiving portion 14c provided on the lid 14. Due to an opening operation of the lid 14 at the fully closed position illustrated in Fig. 3, the engagement between the lock portion 18 and the lock receiving portion 14c is released. Thus, the lock unit 17 allows the lid 14 to move from the fully closed position illustrated in Fig. 3 to the fully open position illustrated in Fig. 1.

Referring to Fig. 11, the holding mechanism 20 is configured to hold the lid 14 at the halfway open position (see Fig. 4) when the lid 14 is closed from the fully open position (see Fig. 1) to the fully closed position (see Fig. 3), but not to hold the lid 14 at the halfway open position (see Fig. 4) when the lid 14 is opened from the fully closed position (see Fig. 3) to the fully open position (see Fig. 1).

Referring to Figs. 5 and 6, the holding mechanism 20 includes the kick spring 23, the first rotating member 24, the second rotating member 25, a restricting member 26, and a damper 28, which are disposed in a case 21. The first rotating member 24 also functions as a transmitting member that transmits the biasing force of the kick spring 23 that moves the lid 14 to the fully open position (see Fig. 1).

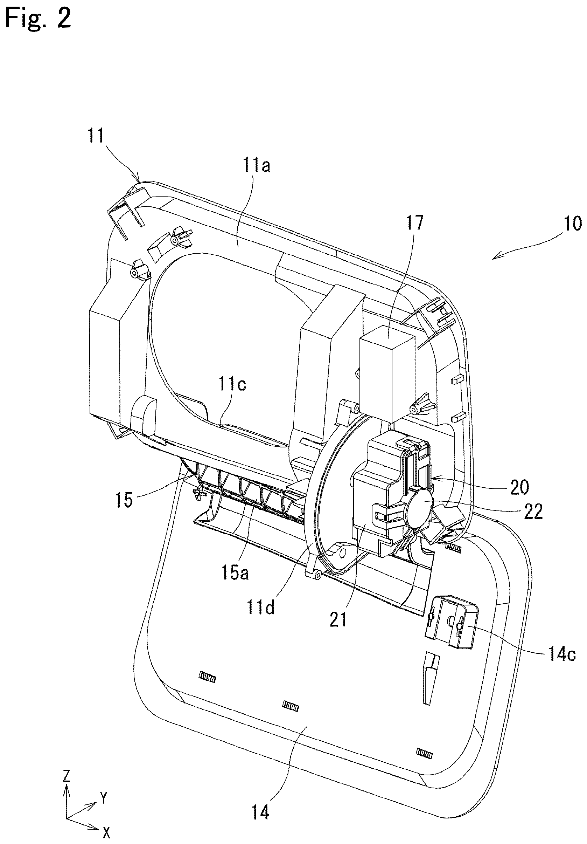

Referring to Figs. 2, 5, and 6, the case 21 is attached to one end side of the base 11 in the vehicle length direction, more specifically, to a mounting portion 11d provided adjacent to the side where the second arm portion 15c of the link member 15 is disposed. The case 21 has a container shape with one end opened and is closed by a cover 22.

Referring to Figs. 4 to 6, the kick spring 23 is configured to rotate the first rotating member 24 in a direction A1 to move the lid 14 to the fully open position (Fig. 1) by using the link member 15. The kick spring 23 is attached to the first shaft portion 24b of the first rotating member 24. One end of the kick spring 23 is locked to the case 21, and the other end of the kick spring 23 is locked to the first rotating member 24. The biasing force of the kick spring 23 is transmitted from the first rotating member 24 to the link member 15. As a result, the link member 15 rotates around the axis line AX2 toward the vehicle exterior side.

Referring to Figs. 4 to 7, the first rotating member 24 includes a base portion 24a having a disc shape disposed in the case 21, and the first shaft portion 24b protruding rearward in the vehicle length direction from the center of the base portion 24a toward the link member 15. The first shaft portion 24b has a non-circular cross-sectional shape corresponding to the cross-sectional shape of the mounting hole 15f of the link member 15. As the first shaft portion 24b passes through the case 21 and the mounting portion 11d of the base 11 and is inserted into the mounting hole 15f in the recess 11a, the first rotating member 24 is rotatably attached to the base 11 and is non-rotatably attached to the link member 15. Thus, the first rotating member 24 and the link member 15 integrally rotate around the axis line AX2.

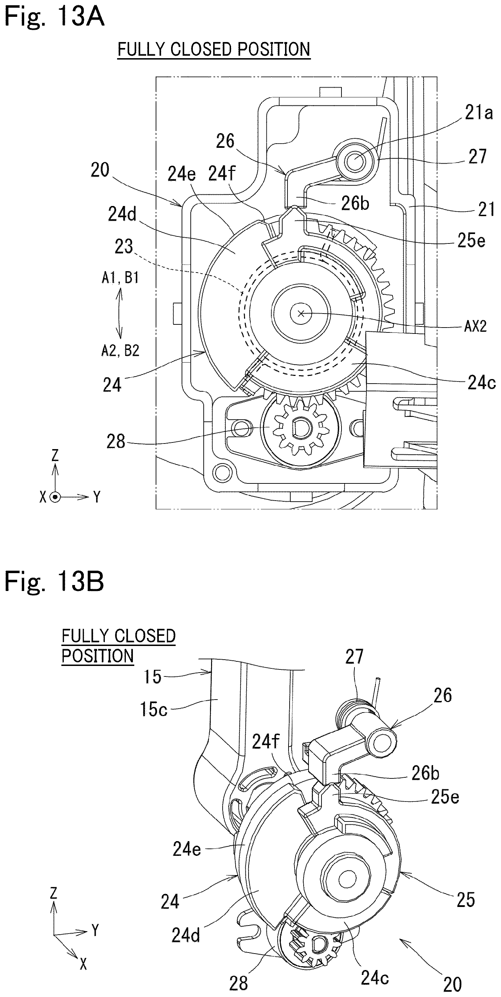

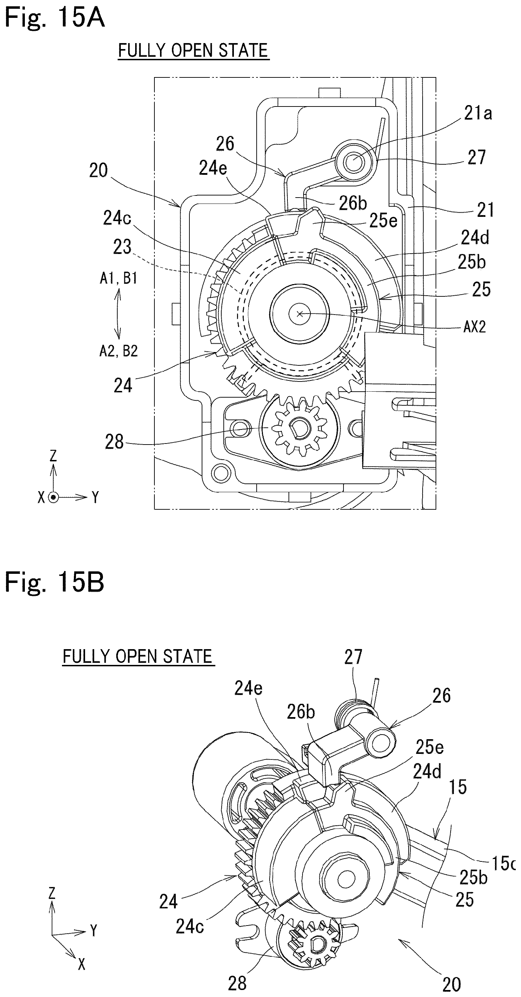

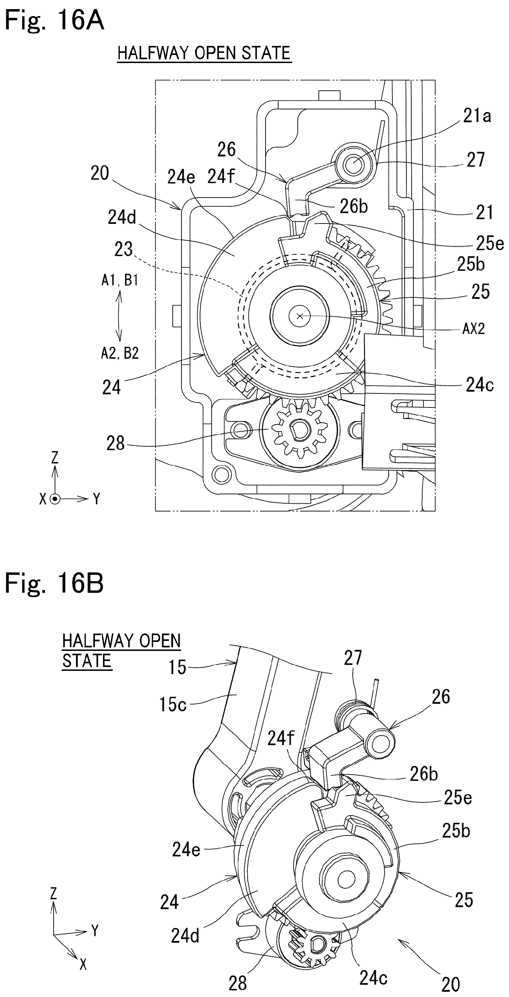

Referring to Fig. 11, when the lid 14 is opened, the first rotating member 24 rotates in the direction A1 due to the biasing force of the kick spring 23, and when the lid 14 is closed, the first rotating member 24 rotates in a direction A2 in response to the rotation of the link member 15 made by a closing operation of the lid 14. The rotation of the first rotating member 24 is not restricted by the restricting member 26 when the lid 14 is opened, but is restricted by the restricting member 26 at the halfway open position (see Fig. 4) when the lid 14 is closed. That is, the first rotating member 24 rotates in conjunction with the lid 14 between a closing rotation position (see Figs. 13A and 13B) and an opening rotation position (see Figs. 15A and 15B) via a restricted position (see Figs. 16A and 16B) which is a rotation angle position at the halfway open position (see Fig. 4).

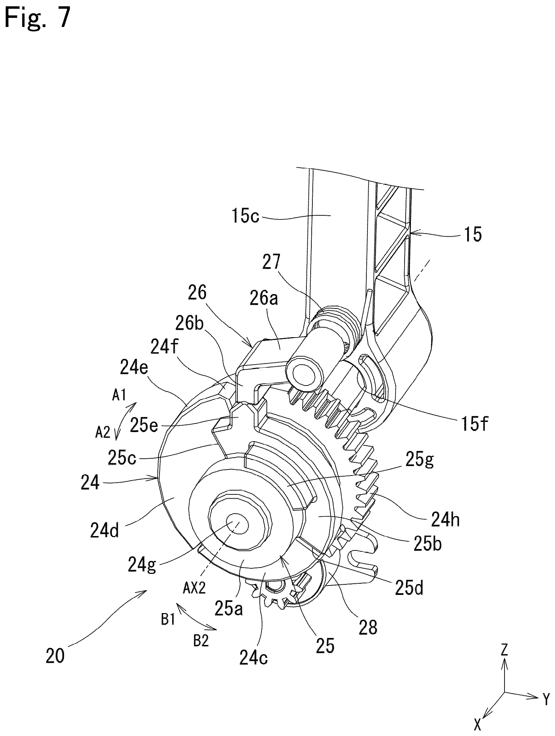

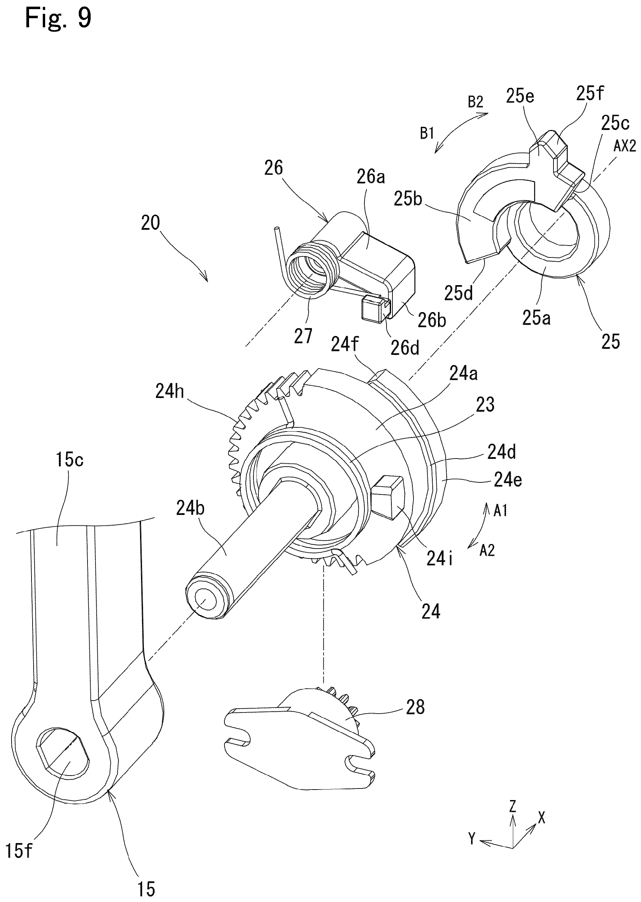

Referring to Figs. 7 to 9, the first rotating member 24 is further provided with a contact portion 24c, a restriction receiving portion 24d, a second shaft portion 24g, a gear portion 24h, and a protruding portion 24i.

The contact portion 24c is configured to come into contact with the second rotating member 25 by a rotation of the first rotating member 24 to rotate the second rotating member 25. The restriction receiving portion 24d is configured to be restricted by the restricting member 26. Both the contact portion 24c and the restriction receiving portion 24d have a fan shape extending around the axis line AX2, and are provided adjacent to each other in the circumferential direction. The contact portion 24c and the restriction receiving portion 24d protrude toward the front side in the vehicle length direction, which is the side opposite to the first shaft portion 24b (the second rotating member 25 side) with respect to the base portion 24a. The contact portion 24c protrudes toward the front side in the vehicle length direction more than the restriction receiving portion 24d does. The configurations of the contact portion 24c and the restriction receiving portion 24d will be described below in more detail.

The second shaft portion 24g has a configuration for rotatably attaching the second rotating member 25. The second shaft portion 24g is provided coaxially with the first shaft portion 24b, and protrudes from the base portion 24a to the side opposite to the first shaft portion 24b. The gear portion 24h is provided in the outer circumferential portion of the base portion 24a in an angular range corresponding to the damper 28 when the first rotating member 24 rotates. The protruding portion 24i is provided to reduce a contact area between the case 21 and the first rotating member 24 and to prevent excessive rotation of the first rotating member 24. The protruding portion 24i protrudes from the base portion 24a toward the rear side in the vehicle length direction, comes into slidably contact with the case 21, and can come into contact with a stopper (not illustrated) formed on the case 21.

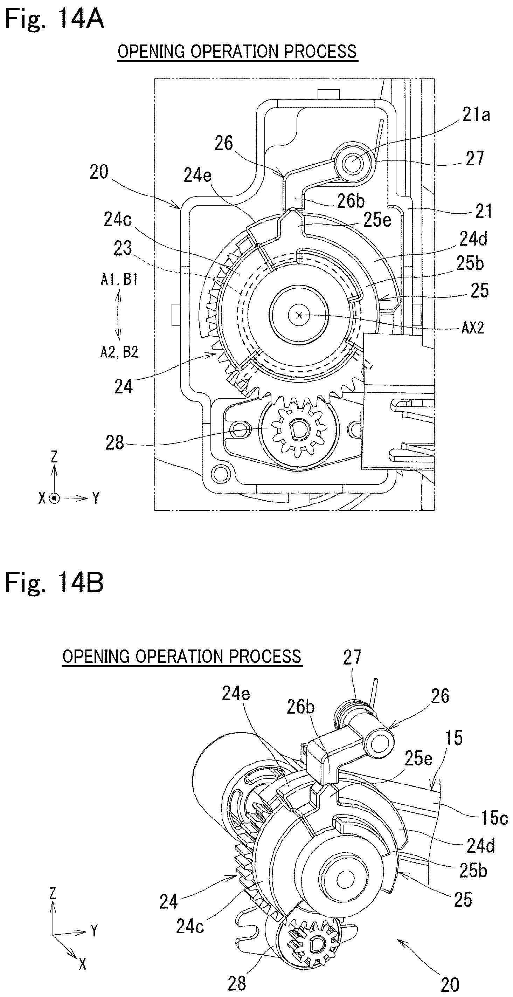

Referring to Fig. 11, the second rotating member 25 has a configuration to rotate by a rotation of the first rotating member 24, to hold the restricting member 26 at the restriction release position (see Figs. 13A and 14A) when the lid 14 is opened, and to allow the restricting member 26 to move to the restricting position (see Fig. 16A) when the lid 14 is closed.

Referring to Figs. 7 to 9, the second rotating member 25 includes a base portion 25a having an annular shape and is pivotally supported by the second shaft portion 24g of the first rotating member 24. Thus, the second rotating member 25 is disposed adjacent to the front side of the first rotating member 24 in the vehicle length direction and is rotatable coaxially with the first rotating member 24. The second rotating member 25 is provided with a contact receiving portion 25b with which the contact portion 24c of the first rotating member 24 comes into contact, and a holding portion 25e for holding the restricting member 26 at the restriction release position (see Figs. 13A and 14A).

The contact receiving portion 25b receives the contact of the contact portion 24c of the first rotating member 24, and rotates the second rotating member 25 between a holding position (refer to Figs. 13A and 14A) and a non-holding position (refer to Figs. 15A and 16A). The contact receiving portion 25b has a fan shape extending around the axis line AX2 and protrudes from the base portion 25a toward the rear side in the vehicle length direction, which is the side of the first rotating member 24. A diameter of the contact receiving portion 25b is equal to a diameter of the contact portion 24c. The contact receiving portion 25b is disposed adjacent to the restriction receiving portion 24d of the first rotating member 24 on the front side in the vehicle length direction, and comes into slidably contact with the restriction receiving portion 24d by a rotation of the first rotating member 24.

A first surface 25c which is one end of the contact receiving portion 25b in the circumferential direction receives contact of the contact portion 24c when the first rotating member 24 rotates in the direction A1. Thus, the second rotating member 25 rotates in the same direction B1 as the first rotating member 24. A second surface 25d which is the other end of the contact receiving portion 25b in the circumferential direction receives contact of the contact portion 24c when the first rotating member 24 rotates in the direction A2. Thus, the second rotating member 25 rotates in the same direction B2 as the first rotating member 24.

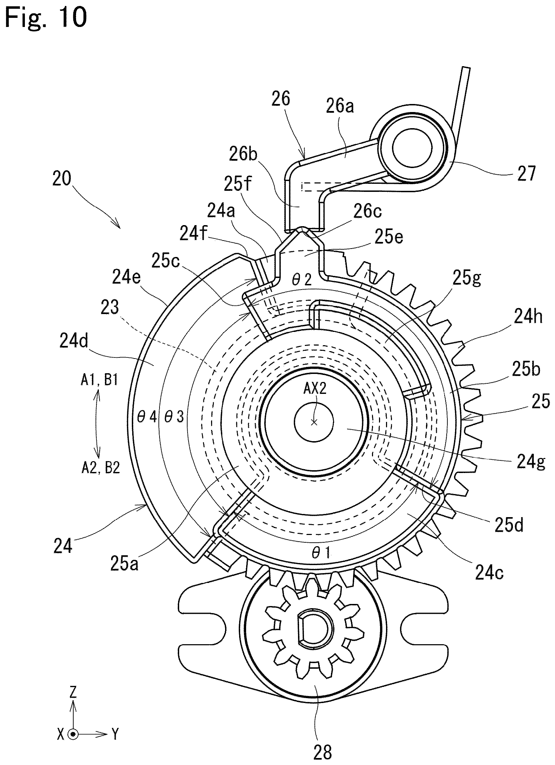

To be more specific, in the circumferential direction around the axis line AX2, the contact portion 24c is formed at an angle θ1 from one end to the other end, and the contact receiving portion 25b is formed at an angle θ2 from one end to the other end as illustrated in Fig. 10. The sum of the angles θ1 and θ2 is set to be less than 360 degrees (360 > θ1 + θ2). Thus, a clearance having an angle θ3 is secured between the contact portion 24c and the contact receiving portion 25b. The angle θ 3 is a differential angle from a start of a rotation of the first rotating member 24 to a start of a rotation of the second rotating member 25. The differential angle θ3 is narrower than the maximum rotation angle at which the first rotating member 24 rotates when the lid 14 is opened and closed. An angle obtained by subtracting the differential angle θ3 (for example, 108 degrees) from the maximum rotation angle (for example, 120 degrees) of the first rotating member 24 corresponds to the rotation angle (for example, 12 degrees) of the second rotating member 25, that is, the angle from the holding position (see Figs. 13A and 14A) to the non-holding position (see Figs. 15A and 16B).

Referring to Figs. 7 to 9, the holding portion 25e is configured to switch the restricting member 26 between the restricting position (see Fig. 16A) and the restriction release position (see Figs. 13A and 14A) by the rotation of the second rotating member 25. The holding portion 25e protrudes radially outward from the outer circumference of the contact receiving portion 25b. The tip portion of the holding portion 25e has a tapered shape and protrudes radially outward from the restriction receiving portion 24d of the first rotating member 24. An inclined surface 25f of the holding portion 25e, which is located at the front side when the second rotating member 25 rotates in the direction B2, also functions as a guide surface for moving the restricting member 26 to the restriction release position (see Figs. 13A and 14A).

Due to a rotation of the second rotating member 25 to the holding position, the holding portion 25e enters inward the restricting member 26 in the radial direction of the second rotating member 25, and holds the restricting member 26 at the restriction release position as illustrated in Figs. 13A and 14A.

Due to a rotation of the second rotating member 25 to the non-holding position, the holding portion 25e moves in the direction B1 with respect to the restricting member 26, and allows the restricting member 26 to move to the restricting position as illustrated in Figs. 16A and 16B. When the second rotating member 25 is rotated to the non-holding position, the holding portion 25e is positioned on the rear side of the restricting portion 26b of the restricting member 26, which will be described in detail below, in the direction B2 in which the second rotating member rotates when the lid 14 is closed. Therefore, when a user moves the lid 14 from the fully open position (see Fig. 1) to the halfway open position (see Fig. 4), the holding portion 25e comes into contact with the restricting portion 26b. Thus, since the rotation of the second rotating member 25 in the direction B2 is restricted, the rotation of the first rotating member 24 in the direction A2 in which the contact portion 24c is in contact with the contact receiving portion 25b is also restricted. As a result, the movement of the lid 14 from the halfway open position (see Fig. 4) to the fully closed position (see Fig. 3) is also restricted.

Referring to Figs. 6 to 8, the second rotating member 25 is provided with a convex portion 25g which is fitted into a groove (not illustrated) formed in the cover 22 to prevent excessive rotation of the second rotating member 25. The convex portion 25g has a fan shape extending around the axis line AX2, protrudes radially outward from the outer circumference of the base portion 25a, and protrudes forward in the vehicle length direction from the contact receiving portion 25b.

Referring to Fig. 11, the restricting member 26 is configured to restrict the rotation of the first rotating member 24 at the halfway open position (see Fig. 4) only when the lid 14 moves from the fully open position (see Fig. 1) to the fully closed position (see Fig. 3). Referring to Figs. 4 and 7 to 9, the restricting member 26 is generally L-shaped and includes a main body portion 26a and the restricting portion 26b.

The main body portion 26a is rotatably attached to the shaft portion 21a formed in the case 21 so as to be positioned radially outside the first rotating member 24 and the second rotating member 25. As a result, the restricting member 26 is rotatable about the shaft portion 21a via the second restriction release position (see Fig. 15A) between the restricting position (see Fig. 16A) at which the restricting member 26 is capable of restricting the rotation of the first rotating member 24 and the first restriction release position (see Figs. 13A and 14A) at which the restricting member 26 is not capable of restricting the rotation of the first rotating member 24.

The restricting portion 26b is provided at the tip of the main body portion 26a and protrudes toward the first rotating member 24 and the second rotating member 25. A surface of the restricting portion 26b facing the holding portion 25e is provided with a fitting groove 26c into which the tip of the holding portion 25e can be fitted. When the lid 14 moves to the fully closed position (see Fig. 3), fitting of the holding portion 25e into the fitting groove 26c suppresses rotation of the second rotating member 25 resulting from vibration or the like.

A width of the restricting portion 26b in the vehicle length direction is equal to the sum of a width of the restriction receiving portion 24d of the first rotating member 24 in the vehicle length direction and a width of the holding portion 25e of the second rotating member 25 in the vehicle length direction as illustrated in Figs. 16A and 16B. Accordingly, when the restricting member 26 rotates to the restricting position, the restriction receiving portion 24d of the first rotating member 24 and the holding portion 25e of the second rotating member 25 can come in contact with the restricting portion 26b. In addition, when the restricting member 26 rotates to the restricting position, the restricting portion 26b has a protrusion amount that does not interfere with the contact portion 24c of the first rotating member 24 and the contact receiving portion 25b of the second rotating member 25.

As illustrated in Figs. 13A, 13B, 14A, and 14B, when the restricting member 26 is rotated to the first restriction release position by the holding portion 25e of the second rotating member 25, the restricting portion 26b is positioned radially outward the restriction receiving portion 24d of the first rotating member 24. Thus, the restriction receiving portion 24d of the first rotating member 24 cannot come into contact with the restricting portion 26b.

Referring to Figs. 11, 15A, and 15B, when the lid 14 moves to the fully open position (see Fig. 1), the second rotating member 25 is rotated to the non-holding position by the first rotating member 24, so the holding of the restricting member 26 by the holding portion 25e is released. In this state, in order to prevent the rotation of the restricting member 26 to the restricting position (see Fig. 16A), the restriction receiving portion 24d of the first rotating member 24 is configured as follows.

The restriction receiving portion 24d can hold the restricting member 26 at the second restriction release position illustrated in Fig. 15A with an outer circumferential portion 24e. A diameter of the restriction receiving portion 24d is smaller than the distance from the axis line AX2 to the tip of the holding portion 25e of the second rotating member 25, and is greater than diameters of the base portion 24a and the contact portion 24c of the first rotating member 24 and the contact receiving portion 25b of the second rotating member 25.

When the lid 14 is rotated to the fully open position (see Fig. 1), one end of the restriction receiving portion 24d is positioned on the radially inner side of the restricting portion 26b. An angle θ4 (see Fig. 10) from one end to the other end of the restriction receiving portion 24d in the circumferential direction is an angle in which the lid 14 is positioned on the radially inner side of the restricting portion 26b until immediately before (for example, 12 degrees before) the lid 14 moves to the halfway open position (see Fig. 4) from the fully open position (see Fig. 1). Thus, when the lid 14 moves from the fully open position (see Fig. 1) to the halfway open position (see Fig. 4), the restriction receiving portion 24d holds the restricting member 26 at the second restriction release position illustrated in Fig. 15A, and prevents the restricting member 26 from moving to the restricting position (see Fig. 16A).

As illustrated in Figs. 16A and 16B, when the lid 14 moves from the fully open position (see Fig. 1) to the halfway open position (see Fig. 4), the restriction receiving portion 24d releases the holding of the restricting member 26 and allows the restricting member 26 to move to the restricting position (see Fig. 16A). In this state, the restriction receiving portion 24d is positioned on the rear side of the restricting portion 26b in the direction A1 in which the lid 14 is rotated to open, and is biased in the direction A1 by the kick spring 23. Therefore, when the user releases his/her hand from the lid 14, the restriction receiving portion 24d comes into contact with the restricting portion 26b, and the rotation of the first rotating member 24 in the direction A1 is restricted. As a result, the lid 14 is held at the halfway open position (see Fig. 4).

An inclined portion 24f for allowing forcible rotation of the first rotating member 24 in the direction A1 when the lid 14 at the halfway open position (see Fig. 4) is opened is provided at an end portion of the restriction receiving portion 24d in the circumferential direction in contact with the restricting member 26. The inclined portion 24f is inclined in a direction away from the restricting portion 26b from the inner side toward the outer side in the radial direction when the restricting member 26 is rotated to the restricting position illustrated in Fig. 16A. However, the inclined portion may be provided in the restricting portion 26b of the restricting member 26, or may be provided in both the restriction receiving portion 24d and the restricting portion 26b.

Referring to Figs. 7 to 9, the restricting member 26 is biased by the kick spring (biasing member) 27 toward the restricting position (see Fig. 16A). One end of the kick spring 27 is engaged with the case 21, and the other end of the kick spring 27 is engaged with an engaging portion 26d provided on the main body portion 26a of the restricting member 26.

The biasing force of the kick spring 27 has a magnitude at which the rotation of the first rotating member 24 in the direction A1 can be curbed by the biasing force of the kick spring 23 with the restricting member 26 being rotated to the restricting position (see Fig. 16A). In addition, the biasing force of the kick spring 27 has a magnitude at which the second rotating member 25 can rotate in the direction B1 by the rotation of the first rotating member 24 by the biasing force of the kick spring 23 with the restricting member 26 being held at the first restriction release position (see Fig. 14A) by the holding portion 25e of the second rotating member 25.

The biasing force of the kick spring 27 has a magnitude at which, when the lid 14 at the halfway open position (see Fig. 4) is manually opened toward the fully open position (see Fig. 1), the restriction receiving portion 24d of the first rotating member 24 can rotate the restricting member 26 to the second restriction release position (see Fig. 15A). The biasing force of the kick spring 27 has a magnitude at which the restricting member 26 can be rotated to the first restriction release position (see Fig. 13A) by the holding portion 25e of the second rotating member 25 when the lid 14 at the halfway open position (see Fig. 4) is pushed toward the fully closed position (see Fig. 3).

The damper 28 has a configuration for curbing vibration of the first rotating member 24 and a rotation speed resulting from the biasing force of the kick spring 23 by using engagement of the first rotating member 24 with the gear portion 24h. Referring to Figs. 6 to 8, the damper 28 is attached to the case 21 to be positioned below the first rotating member 24.

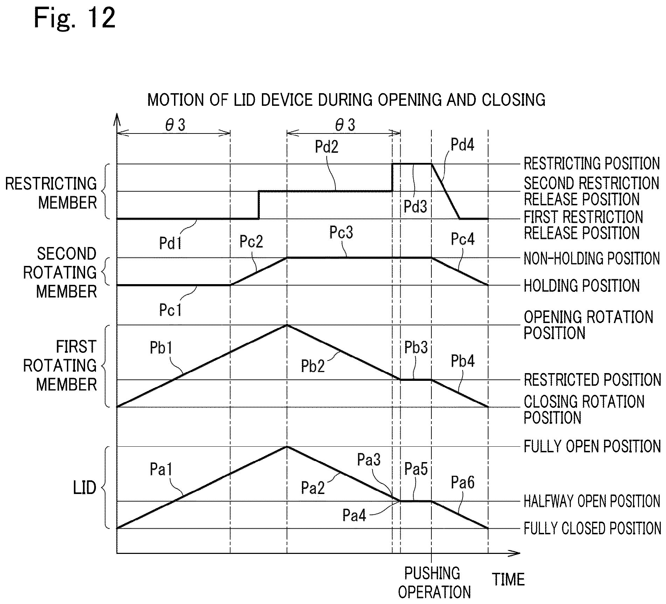

Next, motions of the lid device 10 at the time of opening and closing will be described in detail with reference to Figs. 11 and 12.

When the lid 14 at the fully closed position illustrated in Fig. 3 is opened, a user pushes the lid 14 inward in the vehicle width direction. Accordingly, the lock unit 17 unlocks the lid 14. As a result, the first rotating member 24 at the closing rotation position illustrated in Figs. 13A and 13B starts rotating in the direction A1 due to the biasing force of the kick spring 23 (Pb1 in Fig. 12). As a result, the link member 15 rotates integrally with the first rotating member 24, whereby the lid 14 starts moving from the fully closed position illustrated in Fig. 3 toward the fully open position illustrated in Fig. 1 (Pa1 in Fig. 12).

Until the first rotating member 24 rotates by the differential angle θ3, the second rotating member 25 does not rotate because the contact portion 24c does not come into contact with the contact receiving portion 25b (Pc1 in Fig. 12). Therefore, the restricting member 26 is held at the first restriction release position by the second rotating member 25 (Pd1 in Fig. 12). When the first rotating member 24 rotates by the differential angle θ3, the contact portion 24c comes into contact with the contact receiving portion 25b as illustrated in Figs. 14A and 14B, so the second rotating member 25 starts rotating in the direction B1 (Pc2 in Fig. 12).

When the second rotating member 25 rotates in the direction B1, the holding portion 25e releases the holding of the restricting portion 26b, so the restricting member 26 rotates by the biasing force of the kick spring 27. In this state, since the outer circumferential portion 24e of the restriction receiving portion 24d of the first rotating member 24 holds the restricting portion 26b, the rotation of the restricting member 26 stops at the second restriction release position (Pd2 in Fig. 12).

When the first rotating member 24 rotates to the opening rotation position as illustrated in Figs. 15A and 15B, the lid 14 rotates to the fully open position illustrated in Fig. 1 by the link member 15. Further, the second rotating member 25 rotates to the non-holding position, and the restricting member 26 is maintained at the second restriction release position by the restriction receiving portion 24d of the first rotating member 24.

To close the lid 14 at the fully open position illustrated in Fig. 1, the user places his/her hand on the lid 14 and performs an operation of sliding the lid upward. As a result, the lid 14 starts moving from the fully open position illustrated in Fig. 1 toward the halfway open position illustrated in Fig. 4 (Pa2 in Fig. 12), and the first rotating member 24 starts rotating in the direction A2 by the link member 15 (Pb2 in Fig. 12).

Until the first rotating member 24 rotates by the differential angle θ3, the second rotating member 25 does not rotate because the contact portion 24c does not come into contact with the contact receiving portion 25b (Pc3 in Fig. 12). Further, the restricting member 26 is maintained at the second restriction release position by the restriction receiving portion 24d of the first rotating member 24 (Pd2 in Fig. 12).

When the lid 14 rotates to be close to the halfway open position illustrated in Fig. 4 (Pa3 in Fig. 12), the first rotating member 24 rotates to a position immediately before reaching the differential angle θ3. In this state, the restriction receiving portion 24d of the first rotating member 24 releases the holding of the restricting portion 26b. As a result, the restricting member 26 is rotated to the restricting position illustrated in Fig. 16A (Pd3 in Fig. 12) due to the biasing force of the kick spring 27. Immediately thereafter, the lid 14 is rotated to the halfway open position illustrated in Fig. 4 (Pa4 in Fig. 12). Further, the first rotating member 24 is positioned at the restricted position which the first rotating member reaches after being rotated by the differential angle θ3, and the contact portion 24c comes into contact with the contact receiving portion 25b of the second rotating member 25.

With the lid 14 having rotated to the halfway open position illustrated in Fig. 4, the holding portion 25e of the second rotating member 25 is positioned to the front side of the direction B2 with respect to the restricting portion 26b of the restricting member 26, and the restriction receiving portion 24d of the first rotating member 24 is positioned to the rear side of the direction A2 as illustrated in Figs. 16A and 16B.

When the lid 14 moves to the fully closed position illustrated in Fig. 3 in the halfway open state illustrated in Figs. 16A and 16B, the first rotating member 24 need to be rotated in the direction A2 (closing rotation position side) and the second rotating member 25 needs to be rotated in the direction B2 (holding position side). However, since the holding portion 25e comes into contact with the restricting portion 26b of the restricting member 26 in that case, the rotation of the second rotating member 25 in the direction B2, that is, the rotation of the first rotating member 24 in the direction A2 is hindered.

Further, when the lid 14 moves to the fully open position illustrated in Fig. 1 in the halfway open state illustrated in Figs. 16A and 16B, the first rotating member 24 needs to be rotated in the direction A1 (opening rotation position side). However, since the restriction receiving portion 24d of the first rotating member 24 comes into contact with the restricting portion 26b of the restricting member 26 in that case, the rotation of the first rotating member 24 in the direction A1 is hindered. The biasing force of the kick spring 27 biasing the restricting member 26 has a magnitude at which the rotation of the first rotating member 24 in the direction A1 due to the biasing force of the kick spring 23 can be curbed. Thus, the first rotating member 24 is held at the restricted position (Pb3 in Fig. 12), and the lid 14 is held at the halfway open position illustrated in Fig. 4 (Pa5 in Fig. 12).

When the lid 14 at the halfway open position illustrated in Fig. 4 moves to the fully closed position illustrated in Fig. 3, the user places his/her hand on the lid 14 and performs an operation of pushing the lid 14 inward in the vehicle width direction. As a result, the lid 14 moves toward the vehicle interior side (Pa6 in Fig. 12), and the first rotating member 24 rotates in the direction A2 (Pb4 in Fig. 12). Further, since the contact portion 24c of the first rotating member 24 presses the contact receiving portion 25b, the second rotating member 25 rotates in the direction B2 (Pc4 in Fig. 12). Since the pushing operation force for the lid 14 by the user is transmitted to the second rotating member 25 via the link member 15 and the first rotating member 24, the holding portion 25e enters to the inner side of the restricting member 26 in the radial direction of the second rotating member 25. As a result, the restricting member 26 rotates toward the first restriction release position (Pd4 in Fig. 12).

When the lid 14 rotates to the fully closed position illustrated in Fig. 3, the lock unit 17 locks the lid 14. The first rotating member 24 rotates to the closing rotation position, the second rotating member 25 rotates to the holding position, and the holding portion 25e holds the restricting member 26 at the first restriction release position as illustrated in Figs. 13A and 13B.

On the other hand, when the lid 14 at the halfway open position illustrated in Fig. 4 moves to the fully open position illustrated in Fig. 1, the user places his/her hand on the lid 14 and performs a pull-down operation. As a result, the lid 14 moves downward, and the first rotating member 24 illustrated in Figs. 16A and 16B rotates in the direction A1. Since the pull-down operation force of the lid 14 by the user is transmitted from the link member 15 to the first rotating member 24, the restriction receiving portion 24d enters to the inner side of the restricting portion 26b in the radial direction of the first rotating member 24 and holds the restricting member 26 at the second restriction release position. As a result, the lid 14 is opened by the biasing force of the kick spring 23 in the same manner as when the lid 14 at the fully closed position illustrated in Fig. 3 is opened.

The lid device 10 configured as described above has the following features.

The lid device 10 includes the holding mechanism 20 that can hold the lid 14 at the halfway open position illustrated in Fig. 4 only when the lid 14 moves from the fully open position illustrated in Fig. 1 to the fully closed position illustrated in Fig. 3. On the other hand, the holding mechanism 20 does not hold the lid 14 at the halfway open position illustrated in Fig. 4 when the lid 14 moves from the fully closed position illustrated in Fig. 3 to the fully open position illustrated in Fig. 1. As a result, when the lid 14 is opened, the lid 14 moves to the fully open position illustrated in Fig. 1 by a single opening operation, so a two-motion operation is not required. Therefore, the operability when opening the lid 14 can be improved. On the other hand, when the lid 14 is closed, the lid 14 is held by the holding mechanism 20 when the lid 14 moves from the fully open position illustrated in Fig. 1 to the halfway open position illustrated in Fig. 4 in response to a closing operation, and moves to the fully closed position illustrated in Fig. 3 in response to a further closing operation for the lid 14. As described above, when the lid 14 is closed, the holding mechanism 20 temporarily holds the lid 14 at the halfway open position illustrated in Fig. 4, so it is possible to prevent a hand or clothes from being caught between the lid 14 and the base 11.

The holding mechanism 20 includes the kick spring 23 for moving the lid 14 to the fully open position illustrated in Fig. 1, the first rotating member 24 that rotates in conjunction with the lid 14, and the second rotating member 25 that rotates in contact with the first rotating member 24. The holding mechanism 20 includes the restricting member 26 that restricts rotations of the first rotating member 24 when the lid 14 moves from the fully open position illustrated in Fig. 1 to the halfway open position illustrated in Fig. 4. As a result, the lid 14 can be reliably held at the halfway open position illustrated in Fig. 4 against the biasing force of the kick spring 23.

The first rotating member 24 has a restriction receiving portion 24d that is restricted by the restricting member 26 when the lid 14 moves from the fully open position illustrated in Fig. 1 to the halfway open position illustrated in Fig. 4. The restriction receiving portion 24d is provided with the inclined portion 24f for allowing the first rotating member 24 to rotate in response to movement of the lid 14 from the halfway open position illustrated in Fig. 4 to the fully open position illustrated in Fig. 1. As a result, the lid 14 held at the halfway open position illustrated in Fig. 4 can move to the fully open position illustrated in Fig. 1 again, and the opening 11b can be opened again, so the user convenience can be improved.

The restriction receiving portion 24d prevents the restricting member 26 from moving to the restricting position when the lid 14 moves from the fully open position illustrated in Fig. 1 to the halfway open position illustrated in Fig. 4 by the outer circumferential portion 24e, and allows the restricting member 26 to move to the restricting position when the lid 14 moves from the fully open position illustrated in Fig. 1 to the halfway open position illustrated in Fig. 4. Thus, when the lid 14 moves from the fully open position illustrated in Fig. 1 to the halfway open position illustrated in Fig. 4, the restricting member 26 does not hinder the rotation of the first rotating member 24 caused by the movement of the lid 14. Therefore, it is possible to avoid unintended malfunctions caused by the restricting member 26.

When the lid 14 moves to the fully closed position illustrated in Fig. 3, the second rotating member 25 rotates to the holding position at which the restricting member 26 is held at the restriction release position, and therefore, a configuration in which the lid 14 is not held at the halfway open position illustrated in Fig. 4 when the lid 14 moves to the fully open position illustrated in Fig. 1 can be realized. On the other hand, when the lid 14 moves to the fully open position illustrated in Fig. 1, the second rotating member 25 rotates to the non-holding position at which the restricting member 26 is allowed to move to the restricting position, and therefore, a configuration in which the lid 14 is held at the halfway open position illustrated in Fig. 4 when the lid 14 moves to the fully closed position illustrated in Fig. 3 can be realized.

The contact portion 24c of the first rotating member 24 comes into contact with the contact receiving portion 25b in response to the movement of the lid 14 to the fully open position illustrated in Fig. 1 to rotate the second rotating member 25 to the non-holding position. The contact portion 24c comes into contact with the contact receiving portion 25b in response to the movement of the lid 14 to the fully closed position illustrated in Fig. 3 to rotate the second rotating member 25 to the holding position. As a result, the configuration in which the lid 14 is not held at the halfway open position illustrated in Fig. 4 when the lid 14 moves to the fully open position illustrated in Fig. 1 and the lid 14 is held at the halfway open position illustrated in Fig. 4 when the lid 14 moves to the fully closed position illustrated in Fig. 3 can be reliably realized.

The lid 14 includes the link member 15 having the connecting portion 15a rotatably attached to the lid 14 and the mounting hole 15f for rotatably attaching the lid 14 to the base 11, and the first rotating member 24 includes the first shaft portion 24b attached to the mounting hole 15f. Thus, the lid 14 is slidable with respect to the base 11 by rotation of the link member 15. Therefore, the amount of protrusion of the lid 14 from the base 11 when the lid 14 is opened can be curbed, and thus contact of the lid 14 with a person or an object outside can be reduced. The kick spring 23 moves the lid 14 via the link member 15 by rotating the first rotating member 24. Thus, the lid 14 can reliably move to the fully open position illustrated in Fig. 1 due to the biasing force of the kick spring 23.

The first rotating member 24 and the second rotating member 25 are coaxially disposed. As a result, the space for disposing the first rotating member 24 and the second rotating member 25 can be reduced, so the holding mechanism 20 can be made smaller, and further the lid device 10 can be made smaller.

The halfway open position illustrated in Fig. 4 is set in the range of 10% or more and 15% or less from the fully closed position illustrated in Fig. 3 in the moving range of the lid 14 from the fully closed position illustrated in Fig. 3 to the fully open position illustrated in Fig. 1. That is, the halfway open position is set in an area immediately before the fully closed position. Accordingly, the operation of closing the lid 14 from the halfway open position to the fully closed position can be easily performed.

### (Second Embodiment)

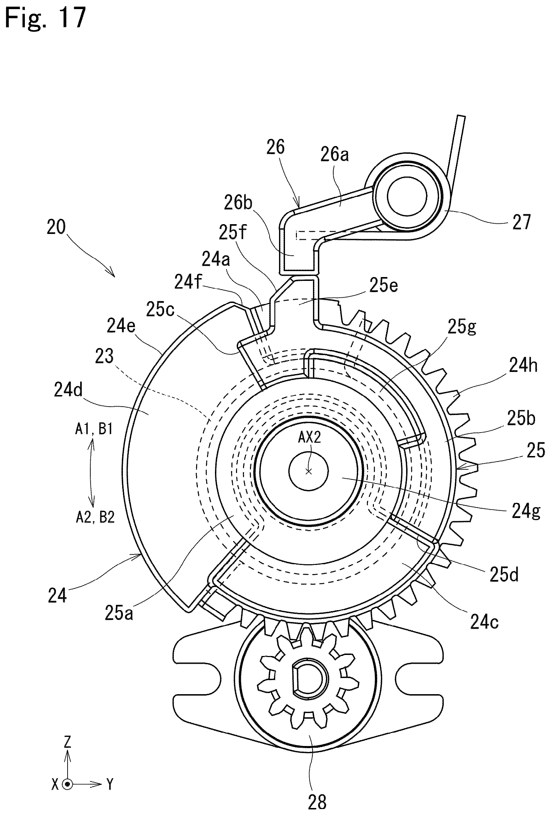

Referring to Fig. 17, the holding mechanism 20 of the lid device 10 of a second embodiment is different from the holding mechanism 20 of the first embodiment in the configurations of the second rotating member 25 and the restricting member 26. In Fig. 17, the same elements as those of the first embodiment are denoted by the same reference numerals, and detailed description thereof will be omitted.

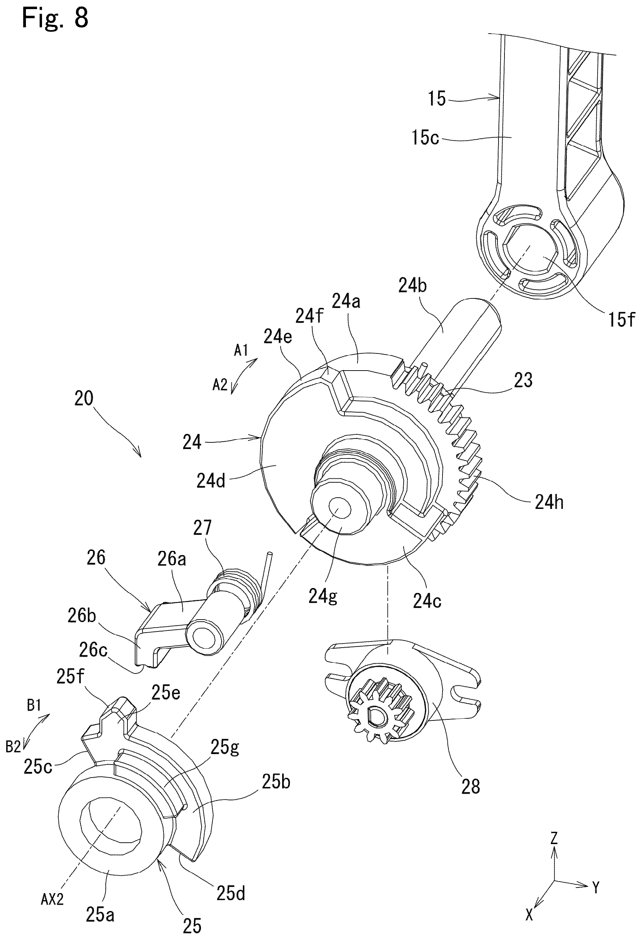

The second rotating member 25 includes an inclined portion 25f on one side of the holding portion 25e and does not include an inclined portion on the other side of the holding portion 25e. In the restricting member 26, the fitting groove 26c illustrated in Fig. 8 is not provided in the restricting portion 26b. In the second embodiment described above as well, it is possible to improve the operability for opening the lid 14, and it is possible to obtain the same operation and effect as those of the first embodiment.

Note that the present invention is not limited to the configuration of the above-described embodiment, and various modifications can be made.

For example, the configuration of the holding mechanism 20 can be changed as necessary, and may be a configuration in which the lid 14 can be held at the halfway open position illustrated in Fig. 4 only when the lid 14 is manually moved from the fully open position illustrated in Fig. 1 to the fully closed position illustrated in Fig. 3.

The restricting member 26 may be attached to the case 21 so as to be slidable (linearly movable) in the radial direction of the first rotating member 24 and the second rotating member 25.

The restriction receiving portion 24d included in the first rotating member 24 may not include the inclined portion 24f. Further, the restriction receiving portion 24d may not hold the restricting member 26 at the second restriction release position.

The configuration in which the second rotating member 25 is rotated by a contact of the first rotating member 24 may be other than the contact portion 24c having a fan shape and the contact receiving portion 25b.

The lid 14 can be changed as necessary as long as the lid 14 is movable between a position at which the lid 14 closes the opening 11b and a position at which the lid 14 opens the opening 11b, and for example, the lid 14 may be configured to be slidable in the vehicle length direction or may be configured to be rotatable with respect to the base 11.

The lid device 10 may be of an automatic opening/closing type in which the holding mechanism 20 is operated by an actuator to electrically open and close the lid 14. In this case, the operability can be improved compared to when the lid 14 needs to be manually opened and closed, for example, when electric power of a battery mounted on the automobile is insufficient.

## Claims

1. A lid device comprising:
a base having an opening;
a lid attached to the base so as to be allowed to move between a fully closed position at which the lid closes the opening and a fully open position at which the lid opens the opening; and
a holding mechanism capable of holding the lid at a halfway open position between the fully open position and the fully closed position only when the lid is moved from the fully open position to the fully closed position.

2. The lid device according to claim 1, wherein the holding mechanism includes:
a biasing member configured to move the lid from the fully closed position to the fully open position;
a first rotating member configured to rotate in conjunction with the lid;
a second rotating member configured to rotate due to contact with the first rotating member when the first rotating member rotates; and
a restricting member configured to move between a restricting position at which rotation of the first rotating member is restricted and a restriction release position at which rotation of the first rotating member is not restricted, and to restrict rotation of the first rotating member when the lid moves from the fully open position to the halfway open position.

3. The lid device according to claim 2, wherein the first rotating member includes a restriction receiving portion configured to be restricted by the restricting member at the restricting position when the lid moves from the fully open position to the halfway open position, and one of the restricting member, and
the restriction receiving portion includes an inclined portion for allowing rotation of the first rotating member in response to movement of the lid from the halfway open position toward the fully open position.

4. The lid device according to claim 3, wherein the restriction receiving portion includes an outer circumferential portion that hinders the restricting member from moving to the restricting position when the lid moves from the fully open position to the halfway open position, and allows the restricting member to move to the restricting position when the lid moves from the fully open position to the halfway open position.

5. The lid device according to any one of claims 2 to 4, wherein the second rotating member is rotatable between a holding position at which the restricting member is held at the restriction release position and a non-holding position at which the restricting member is allowed to move to the restricting position, rotates to the holding position in response to rotation of the first rotating member caused by movement of the lid from the fully open position to the fully closed position, and rotates to the non-holding position in response to rotation of the first rotating member caused by movement of the lid from the fully closed position to the fully open position.

6. The lid device according to claim 5, wherein the second rotating member includes a contact receiving portion that receives contact of the first rotating member caused by rotation of the first rotating member, and
the first rotating member includes a contact portion that comes into contact with the contact receiving portion when the lid moves from the fully closed position to the fully open position to rotate the second rotating member to the non-holding position, and comes into contact with the contact receiving portion when the lid moves from the fully open position to the fully closed position to rotate the second rotating member to the holding position.

7. The lid device according to any one of claims 2 to 4, further comprising a link member having one end portion rotatably attached to the lid and the other end portion rotatably attached to the base, wherein the first rotating member is rotatably attached to the base and includes a shaft portion attached to the other end portion of the link member, and
the biasing member is attached to the shaft portion of the first rotating member, and causes the first rotating member to rotate to move the lid via the link member.

8. The lid device according to any one of claims 2 to 4, wherein the first rotating member and the second rotating member are coaxially disposed.

9. The lid device according to any one of claims 1 to 4, wherein the halfway open position is set in a range of 10% or more and 15% or less from the fully closed position in a moving range of the lid from the fully closed position to the fully open position.
